Europäisches Patentamt

European Patent Office

Office européen des brevets

(11) Veröffentlichungsnummer: **0 319 731 B1**

(12) **EUROPÄISCHE PATENTSCHRIFT**

(45) Veröffentlichungstag der Patentschrift: **08.07.92**

(21) Anmeldenummer: **88118810.6**

(22) Anmeldetag: **11.11.88**

(51) Int. Cl.5: **B23B 17/00**

(54) **Drehmaschine mit einem axial verschiebbaren Spindelstock.**

(30) Priorität: **11.12.87 DE 3742042**

(43) Veröffentlichungstag der Anmeldung:
**14.06.89 Patentblatt 89/24**

(45) Bekanntmachung des Hinweises auf die
Patenterteilung:
**08.07.92 Patentblatt 92/28**

(84) Benannte Vertragsstaaten:
**CH FR GB IT LI SE**

(56) Entgegenhaltungen:
**EP-A- 0 226 836        CH-A- 94 154**
**DE-A- 2 526 343        GB-A- 2 156 712**
**US-A- 4 484 387        US-A- 4 510 668**

**PATENT ABSTRACTS OF JAPAN Band 10, Nr.
261 (M-514)(2317), 5 September 1986 ; & JP -
A - 6186103 (CITIZEN WATCH LTD).**

**PATENT ABSTRACTS OF JAPAN Band 12, Nr.
428 (M-762)(3275), 11 November 1988 & JP -
A - 63162101 (OKUMA MACH WORKS LTD).**

(73) Patentinhaber: **Gildemeister AG
Morsestrasse 1
W-4800 Bielefeld 11(DE)**

(72) Erfinder: **Göhren, Horst, Dr.Ing.
Pappelbrink 15
W-3000 Hannover 52(DE)**
Erfinder: **Schlie, Frithjof
Böckerstrasse 8
W-3000 Hannover 51(DE)**

**Beschreibung**

Die Erfindung betrifft eine Drehmaschine mit einem Maschinenbett, mit mindestens einem auf der horizontalen Oberseite des Maschinenbettes axial verschiebbaren Spindelstock, in dem eine Werkstückspindel drehbar gelagert ist, mit mindestens einem quer zur Werkstückspindel verschiebbaren Bettschlitten, dessen horizontal verlaufende Führungsbahnen an einer senkrechten Fläche des Maschinenbettes angeordnet sind und der seinerseits eine Führungsbahn aufweist, die quer zur Führungsbahn des Bettschlittens und quer zur Werkstückspindelachse in einer senkrechten Ebene verläuft und auf denen ein Werkzeugschlitten angeordnet ist.

Es ist eine derartige Drehmaschine aus DE-OS 20 62 668 bekannt, deren Spindel in einem axial verschieblichen Spindelstock gelagert ist und die mit einem ein Werkstück haltenden Spannelement ausgerüstet ist. Auf dieses Werkstück wirkt ein Werkzeug ein, das in einer zur Spindelachsrichtung senkrechten Ebene verfahrbar ist.

Das Maschinenbett, das die Führung für den Spindelstock und für einen Planschlitten aufweist, ist gekröpft ausgeführt, so daß sich ein weit ausladendes Gestell ergibt. Trotzdem können nur relativ kurze Werkstücke bearbeitet werden, weil nur die Höhe des vorkragenden, quer zur Vorschubrichtung des Spindelstockes und des Planschlittens verschiebbaren Oberschlitten und die Werkzeugträgerbauhöhe für die Längsbearbeitung des Werkstücks zur Verfügung steht. Für Stangenteile ist die Maschine daher nicht geeignet.

Es ist außerdem eine Drehmaschine aus DE-OS 25 26 343 bekannt, bei der die Spindel als Pinole ausgebildet ist, die sich im Spindelstock axial verschieben läßt. An der Stirnseite des Spindelstocks ist eine horizontale Führung für einen Werkzeugschlitten vorgesehen. Obwohl die Maschine an der Stirnseite den notwendigen Freiraum aufweist, verfügt sie über keinen weiteren Schlitten. Der Spindelkasten soll in weiterer Ausgestalltung gleichzeitig das Maschinengestell bilden. Durch die Ausbildung der Werkstückspindel als Pinole wird die Variationsmöglichkeit der auf dieser Grundeinheit aufbauenden Maschinenkonfiguration stark eingeschränkt und die Leistung des Werkstückspindelantriebs begrenzt.

Die JP-A 61-86103 zeigt eine Drehmaschine mit einer quaderförmigen Grundeinheit als Maschinenbett, das an seiner Oberseite Führungsbahnen für einen Werkzeugrevolver und an seiner Stirnseite Führungsbahnen für einen axial verschieblichen Spindelkasten aufweist. Bereits für die kollisionsfreie Schaltbewegung des Werkzeugrevolvers muß bei dieser Maschine eine Mulde unterhalb des Revolvers vorgesehen werden. Eine Vorschubbewegung in einer zur Spindelachse und zur Werkzeugrevolverachse senkrechten Richtung ist nicht vorgesehen. Für sie bietet die Anordnung auch keinen Raum.

Der Erfindung liegt die Aufgabe zugrunde, bei einer Drehmaschine der eingangs genannten Art, mit Relativbewegungen zwischen Werkzeug und Werkstück in drei linearen, zueinander rechtwinkligen Richtungen, den Arbeitsraum nicht zu beeinträchtigen und einen großen Hub für den Werkzeugschlitten zu ermöglichen.

Die Aufgabe wird durch die Merkmale des 1. Anspruchs gelöst.

Die Form der Grundeinheit und die Anordnung der Führungsbahnen ermöglicht einen großen Hub für den Werkzeugschlitten, wobei der Hub des Spindelstocks dadurch ebenfalls nicht begrenzt wird.

Der Spindelstock ist insbesondere bei großer Antriebsleistung eine relativ schwere Baueinheit. Die Einleitung der Kräfte in die Grundeinheit und die Belastung der Führungsflächen ist deshalb bei an der Oberseite der Grundeinheit angeordneten Führungsbahnen vorteilhafter als bei an der Stirnfläche angeordneten.

Die beanspruchte Drehmaschine mit dem Maschinenbett baut sehr steif, einmal weil die quaderförmige Grundeinheit eine sehr verwindungssteife und kompakte Konstruktion darstellt, die sich zusätzlich leicht verrippen läßt, zum anderen, weil zwischen dem Spindelkasten und der Grundeinheit nur eine Trennebene, zwischen dem Werkzeugträger und der Grundeinheit höchstens zwei Trennebenen bestehen. Konstruktionen, bei denen die Vorschubbewegung in drei zueinander senkrechten Richtungen nur durch das Werkzeug ausgeführt werden, müssen drei Trennstellen in einem Bauteil spielfrei beherrschen, was zu Steifigkeitseinbußen führt.

Da zwei der drei Führungsflächen an einem Bauteil, der Grundeinheit, angeordnet sind, lassen sich diese Führungsflächen in einer Aufspannung auch präzise fertigen, so daß die Drehmaschine auch dadurch mit hoher Genauigkeit arbeitet.

Die Grundeinheit kann auch die Basis für eine zweispindlige Drehmaschine bilden. In diesem Fall müssen zwei Führungsbahnen quer zur Führungsbahn für die Bettschlitten vorgesehen werden. Diese Anordnung ergibt sich auch, wenn die vorgeschlagene Grundeinheit mit einer zweiten spiegelbildlich ausgeführten Grundeinheit zusammengefügt wird.

Soll mehr als ein Werkzeugträger vorgesehen werden, muß die Führungsbahn des Bettschlittens sich auf beiden Seiten der Spindelstockführung etwa gleich lang erstrecken, so daß jeweils auf einander gegenüberliegenden Seiten der Werkstückspindel bzw. des zu bearbeitenden Werkstücks je ein Bettschlitten geführt werden kann. Vorteilhafter Weise würden dann auf dem einen Bettschlitten der Werkzeugträger für Drehwerkzeuge, z. B. ein Werkzeugrevolver, unverschiebbar aufgenommen werden, während der zweite Bettschlitten den verschiebbaren Werkzeugschlitten trägt, auf dem vorzugsweise rotierend angetriebene Werkzeuge angeordnet werden können.

Die quaderförmige Gestalt der Grundeinheit bildet an der Oberseite ebene Flächen, die zum Befestigen von Werkzeug-und/oder Werkstückwechseleinrichtungen dienen können. Die Grundeinheit mit einer Führungsbahn auf der Oberseite für den verschiebbaren Spindelstock, einer parallelen Führungsbahn an einer Stirnfläche und dem Führungsbahnpaar senkrecht zu diesen beiden Führungsbahnen bietet darüberhinaus die Möglichkeit, auf einem zusätzlichen Bettschlitten eine Gegenspindel anzuordnen, die die rückseitige Bearbeitung eines in der Werkstückspindel vorbearbeiteten Werkstücks erlaubt. Dazu wird auf der zweiten, parallel zur Spindelstockführungsbahn verlaufenden Führungsbahn ein Werkzeugträger vorgesehen. Das Werkstück wird durch eine Querverschiebung des Bettschlittens mit der Gegenspindel diesem Werkzeugträger gegenübergestellt.

Ausführungsbeispiele der Erfindung werden an Hand der Zeichnungen näher erläutert. Es zeigen:

Fig.1      eine Drehmaschine in Draufsicht
Fig.2      eine Grundvariante des Maschinenbettes;
Fig.3      einen Kreuzschlitten mit Werkzeugträger;
Fig.4      eine Maschinenbettvariante für eine zweispindlige Ausführung;
Fig.5      eine Variante für eine Doppelschlittenausführung;
Fig.6      eine Variante für eine Drehmaschine mit Gegenspindel.

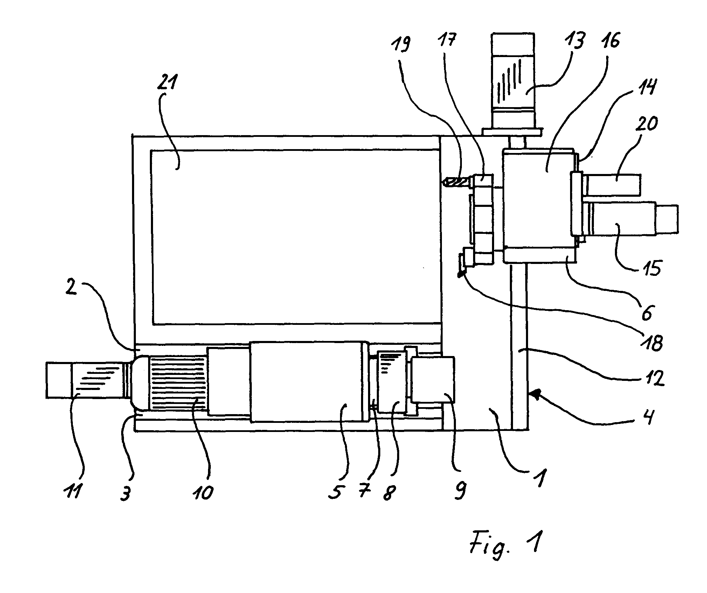

Eine einfache Ausführung einer Drehmaschine mit dem erfindungsgemäßen Maschinenbett zeigt Fig. 1 in Draufsicht. Das Maschinenbett 1 besitzt zwei Paar Führungsbahnen 2,3,4 für den verschiebbaren Spindelstock 5 und den Bettschlitten 6. Im Spindelstock 5 ist die Drehspindel 7 gelagert, an der ein Spannfutter 8 befestigt ist. Das Spannfutter 8 trägt das Werkstück 9, das bearbeitet werden soll. Die Drehspindel 7 wird durch den Motor 10 rotierend angetrieben. Der Spindelstock 5 wird zusammen mit dem Spannfutter 8, dem Werkstück 9 und dem Motor 10 auf den Führungen 2,3 durch den Vorschubmotor 11 verschoben.

Das Führungsbahnenpaar 4, von dem nur die obere Führung 12 zu sehen ist, ist quer zur Richtung der Führungsbahnen 2,3 des Spindelstocks 5 angeordnet. Auf dem Führungsbahnenpaar 4 wird ein Bettschlitten 6 durch den Vorschubmotor 13 verschoben. Der Bettschlitten 6 trägt seinerseits einen Werkzeugschlitten 14, der durch den Vorschubmotor 15 relativ zum Bettschlitten 6 verschoben werden kann. Wie aus der Draufsicht der Fig. 1 bereits deutlich wird, ist der Raum vor dem Führungsbahnenpaar 4 senkrecht zur Zeichenebene bis zur Aufstellfläche der Drehmaschine völlig frei, so daß sich für den Werkzeugschlitten 14 ausreichend lange Führungen unterbringen lassen, ohne daß der Arbeitsraum beinträchtigt wird. Auf dem Werkzeugschlitten 14 ist ein Werkzeugträger, z. B. hier ein Werkzeugrevolver 16 befestigt, der an der dem Werkstück 9 zugewandten Seite eine Revolverkopfscheibe 17 trägt. In der Revolverkopfscheibe 17 sind die Bearbeitungswerkzeuge eingespannt. Von Ihnen ist hier nur ein Außendrehwerkzeug 18 und ein Innenbearbeitungswerkzeug 19 dargestellt. Das Innenbearbeitungswerkzeug 19 kann durch einen Antriebsmotor 20 rotierend angetrieben sein. Das Führungsbahnenpaar 2,3 des Spindelstocks 5 und das Führungsbahnenpaar 4 für den Bettschlitten 6 bilden einen Winkel, in dem durch die quaderförmige Gestalt des Maschinenbetts 1 eine Aufspannfläche 21 gebildet ist. Diese Aufspannfläche 21 kann für die Anordnung von hier nicht dargestellten Werkzeug- und Werkstückwecheleinrichtungen genutzt werden. Mit den für Drehmaschinen übliche Achsbezeichnungen führt der Spindelstock also den Vorschub in Z-Richtung, der Bettschlitten den Vorschub in X-Richtung und der Werkzeugschlitten den Vorschub in Y-Richtung aus. Dadurch ist eine vielseitige Bearbeitung an dem Werkstück möglich, ohne daß der Arbeitsraum eingeschränkt wird.

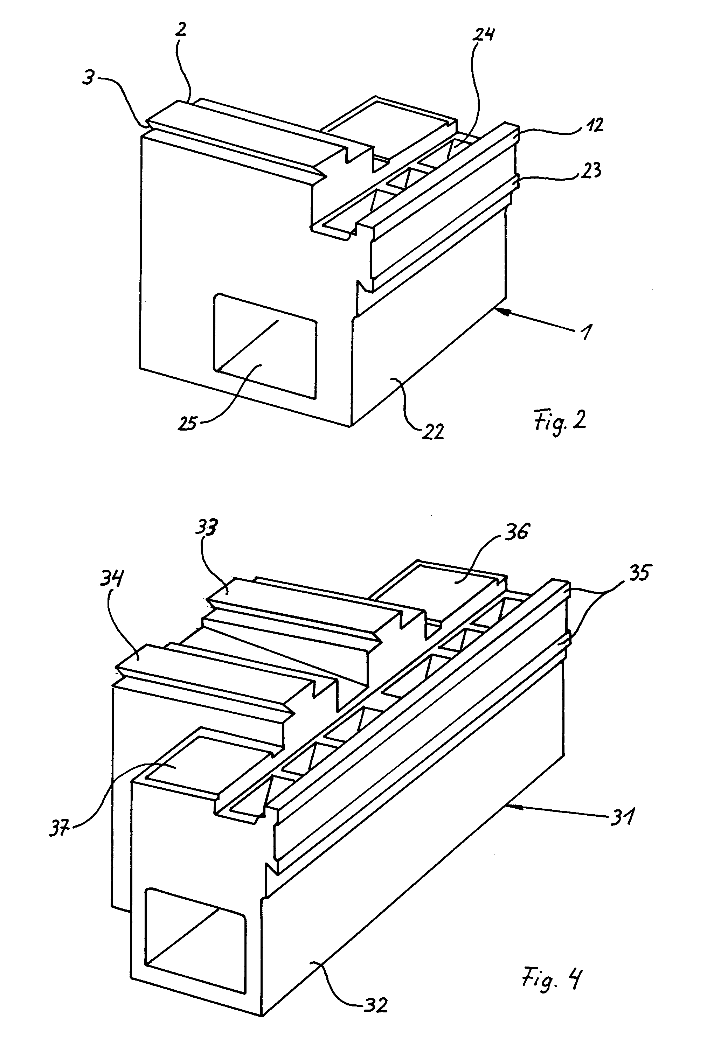

Fig. 2 zeigt das Maschinenbett 1 in perspektivischer Ansicht ohne Aufbauten. An der Grundeinheit 22 erkennt man die Führungen 12,23, die zu dem Führungsbahnenpaar 4 des Bettschlittens 6 gehören. Die Führung 12 liegt dabei erfindungsgemäß senkrecht über der Führung 23. Quer zu den Führungen 12,23 sind an der Oberseite der Grundeinheit 22 die Führungsbahnen 2,3 des Spindelstocks 5 angeordnet. Hinter den Führungen 12,23 ist ein Späneschacht 24, der den freien Spänefall zum Spänetunnel 25 gewährleistet. In den Spänetunnel 25 wird ein Späneförderer eingeschoben. Der Späneschacht kann relativ schmal gehalten werden, weil die Bearbeitung des Werkstücks nur in einer senkrechten Ebene erfolgt.

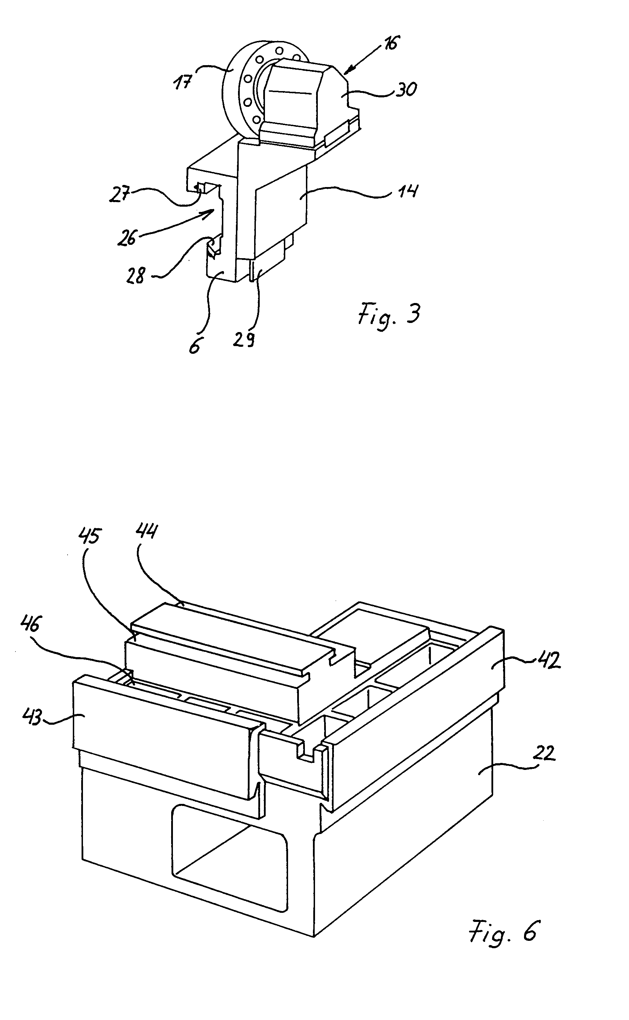

Fig. 3 zeigt den Bettschlitten 6 mit seinem Führungsprofil 26 und den Druckleisten 27,28. Der Bettschlitten 6 trägt Führungsbahnen 29 für den Werkzeugschlitten 14. Auf dem Werkzeugschlitten 14 ist das Gehäuse 30 des Werkzeugrevolvers 16 angeordnet, dessen Revolverscheibe 17 eine zur Spindelstockführung parallele Achse hat. Auf dem horizontalen Schenkel des Werkzeugschlittens 14 können natürlich auch Revolver mit anderer Achsorientierung angeordnet werden.

Fig. 4 zeigt ein Maschinenbett 31 für zwei parallel angeordnete Spindelstöcke. Die quaderförmige Grundeinheit 32 bekommt dadurch langgestrecktere Gestalt. Der Grundaufbau der Führungsbahnen für die Spindelstöcke 5 und Bettschlitten 6 ändert sich jedoch dadurch nicht. Auf der Oberseite der Grundeinheit 32 sind zwei Führungsbahnpaare 33,34 für zwei Spindelstöcke 5 angeordnet, während an der Stirnseite der Grundeinheit 32 ein Führungsbahnpaar 35 vorgesehen ist, auf dem zwei Bettschlitten 6 mit der entsprechenden Ausstattung verschieblich sind. Jeder Bettschlitten 6 ist einem Spindelstock 5 zugeordnet. Zwischen jeweils einem Führungsbahnpaar 33,34 für einen Spindelstock 5 und dem Führungsbahnpaar 35 für den Bettschlitten ergibt sich jeweils eine Aufspannfläche 36,37. Das Maschinenbett 31 kann auch durch Zusammenfügen einer Grundeinheit gemäß Fig. 2 mit seiner spiegelbildlichen Ausführung erzeugt werden. Dabei ergibt sich allerdings eine Trennfuge 38, die in Fig. 4 gestrichelt angedeutet ist.

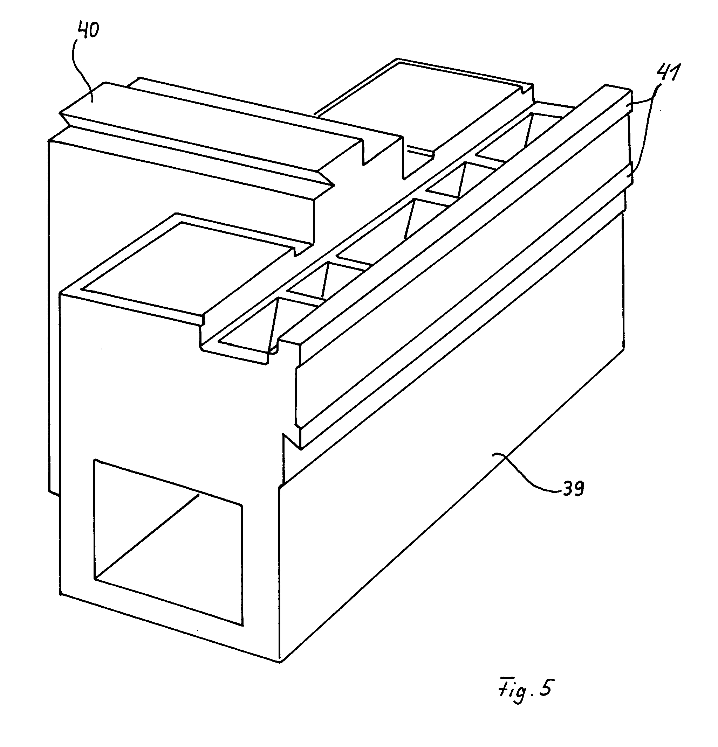

Die Grundeinheit 39 gemäß Fig. 5 entspricht der der Fig. 4 mit Ausnahme des nur einen Führungsbahnpaares 40 für nur einen Spindelstock 5. Auf den Schlittenführungen können zwei Bettschlitten 6 angeordnet werden, von denen der eine vorzugsweise die Drehwerkzeuge und der andere die angetriebenen Bohr- und Fräswerkzeuge tragen sollte, da die Vorschubbewegung des Werkstücks die gleichzeitige Bearbeitung auf Sonderfälle beschränkt. In diesem Fall braucht nur der Bettschlitten für die Bohr- und Fräswerkzeuge mit einem in Y-Richtung verfahrbaren Werkzeugschlitten ausgerüstet zu werden.

Das in Fig. 6 dargestellte Maschinenbett ist für eine Drehmaschine mit Gegenspindel für die Rückseitenbearbeitung gedacht. Zusätzlich zu dem Führungsbahnpaar 42 ist ein Führungsbahnpaar 43 an einer weiteren Stirnfläche der Grundeinheit 22 angebracht, das parallel zu den Führungen 44,45 des Spindelstocks 5 verläuft. Zwischen der Führung 45 und dem Führungsbahnpaar 43 ist ein weiterer, verrippter Späneschacht 46 untergebracht. Auf dem Führungsbahnpaar 42 ist neben dem Bettschlitten 6 ein weiterer Schlitten angeordnet, der eine angetriebene Werkstückspindel als Gegenspindel trägt. Auf dem Führungsbahnpaar 43 ist ein dritter Bettschlitten 6 aufgebaut, dessen Werkzeuge auf die Gegenspindel gerichtet sind.

Allen gezeigten Ausführungsformen ist die kompakte Bauweise der Grundeinheit, die platzsparende Anordnung der Führungsbahnen und der große Freiraum vor den Bettschlittenführungen für die Anordnung der Vertikalschlitten gemeinsam.

**Patentansprüche**

1.   Drehmaschine mit einem Maschinenbett (1,31), mit mindestens einem auf der horizontalen Oberseite des Maschinenbettes (1,31) axial verschiebbaren Spindelstock (5), in dem eine Werkstückspindel (7) drehbar gelagert ist, mit mindestens einem quer zur Werkstückspindel (7) verschiebbaren Bettschlitten (6), dessen horizontal verlaufende Führungsbahnen (4,35,41,42) an einer senkrechten Fläche des Maschinenbettes (1,31) angeordnet sind und der seinerseits eine Führungsbahn (29) aufweist, die quer zur Führungsbahn (4,35, 41,42) des Bettschlittens (6) und quer zur Werkstückspindelachse in einer senkrechten Ebene verläuft und auf denen ein Werkzeugschlitten (14) angeordnet ist, dadurch gekennzeichnet, daß das Maschinenbett durch eine quaderförmige Grundeinheit (22,32,39) gebildet wird, daß die Führungsbahnen (2,3,33,34, 40,44,45) für den Spindelstock (5) an der Oberseite der quaderförmigen Grundeinheit (22,32,39) und die Führungsbahnen (4,35,41,42) für den Bettschlitten (6) an einer dazu senkrechten Fläche der quaderförmigen Grundeinheit (22,32,39) angeordnet sind und die Führungsbahn (29) für den Werkzeugschlitten (14) in einer senkrechten Ebene vor der Führungsbahn (4,35,41,42) des Maschinenbettes (1) für den Bettschlitten (6) liegt.

2.   Drehmaschine mit einem Maschinenbett nach Anspruch 1, dadurch gekennzeichnet, daß die Führungsbahnen (35,41) des Bettschlittens (6) sich beiderseits der Führungsbahnen (33,34,40) des Spindelstocks (5) erstrecken.

3.   Drehmaschine mit einem Maschinenbett nach Anspruch 1, dadurch gekennzeichnet, daß ein weiteres Paar Führungsbahnen (34,43) am Maschinenbett (22,31) angeordnet ist, das parallel zu den Führungsbahnen (33,44,45) des Spindelstocks (5) verläuft.

4.   Drehmaschine mit einem Maschinenbett nach Anspruch 3, dadurch gekennzeichnet, daß das weitere Paar Führungsbahnen (34) auf der Oberseite des Maschinenbettes (31) verläuft.

5.   Drehmaschine mit einem Maschinenbett nach Anspruch 3, dadurch gekennzeichnet, daß das weitere Paar Führungsbahnen (43) an einer weiteren Stirnwand des Maschinenbettes (22) angeordnet ist und daß die Führungsbahnen (43) in einer senkrechten Ebene liegen.

6.   Drehmaschine mit einem Maschinenbett nach Anspruch 1, dadurch gekennzeichnet, daß an der Oberseite des Maschinenbettes (1,31) in dem durch die Führungsbahnen (2,12,33,34, 35,42,44) gebildeten Winkel sich eine ebene Aufspannfläche (21,36,37) für Zusatzaggregate ergibt.

## Claims

1. A lathe having a machine bed (1, 31), at least one headstock (5) which is axially displaceable on the horizontal top side of the machine bed (1, 31) and in which a workpiece spindle (7) is rotatably mounted, at least one bed carriage (6) which is displaceable transversely with respect to the workpiece spindle (7) and whose horizontally extending guideways (4, 35, 41, 42) are arranged on a vertical surface of the machine bed (1, 31) and which in turn has a guideway (29) which extends transversely to the guideway (4, 35, 41, 42) of the bed carriage (6) and transversely to the axis of the workpiece spindle in a vertical plane and on which a tool carriage (14) is arranged, characterised in that the machine bed is formed by a parallelepipedic base unit (22, 32, 39), that the guideways (2, 3, 33, 34, 40, 44, 45) for the headstock (5) are arranged at the top side of the parallelepipedic base unit (22, 32, 39) and the guideways (4, 35, 41, 42) for the bed carriage (6) are arranged on a surface, which is perpendicular thereto, of the parallelepipedic base unit (22, 32, 39) and the guideway (29) for the tool carriage (14) is disposed in a vertical plane in front of the guideway (4, 35, 41, 42) of the machine bed (1) for the bed carriage (6).

2. A lathe having a machine bed according to claim 1 characterised in that the guideways (35, 41) of the bed carriage (6) extend on both sides of the guideways (33, 34, 40) of the headstock (5).

3. A lathe having a machine bed according to claim 1 characterised in that a further pair of guideways (34, 43) is arranged on the machine bed (22, 31), which extends parallel to the guideways (33, 44, 45) of the headstock (5).

4. A lathe having a machine bed according to claim 3 characterised in that the further pair of guideways (34) extends on the top side of the machine bed (31).

5. A lathe having a machine bed according to claim 3 characterised in that the further pair of guideways (43) is arranged at a further end wall of the machine bed (22) and that the guideways (43) are disposed in a vertical plane.

6. A lathe having a machine bed according to claim 1 characterised in that a flat clamping surface (21, 36, 37) for ancillary assemblies is provided at the top side of the machine bed (1, 31) in the angle formed by the guideways (2, 12, 33, 34, 35, 42, 44).

## Revendications

1. Tour comprenant un banc machine (1,31), avec au moins une poupée (5), déplaçable axialement sur la face supérieure horizontale du banc machine (1,31), dans laquelle une broche à pièce (7) est montée à rotation, avec au moins un chariot de banc (6), déplaçable transversalement par rapport à la broche à pièce (7) et dont les pistes de guidage (4,35,41,42) horizontales sont disposées sur une surface verticale du banc machine (1,31) et qui présente de son côté unepiste de guidage (29), qui s'étend transversalement par rapport à la piste de guidage (4,35,41,42) du chariot de banc (6) et transversalement par rapport à l'axe de broche de pièce, dans un plan vertical, et sur lequel est disposé un chariot porte-outil (14), caractérisé en ce que le banc machine est formé par un ensemble de base (22,32,39) de forme parallélépipédique, en ce que les pistes de guidage (2,3,33,34,40,44,45) pour la poupée (5) sont disposées sur la face supérieure de l'ensemble de base (22,32,39) de forme parallélépipédique et les pistes de guidage (4,35,41,42) pour le chariot de banc (6) sont disposées sur une surface, lui étant perpendiculaire, de l'ensemble de base (22,32,39) de forme parallélépipédique et la piste de guidage (29) pour le chariot porte-outil (14) est disposée dans un plan vertical, face à la piste de guidage (4,35,41,42) du banc machine (1), pour le chariot de banc (6).

2. Tour comprenant un banc machine selon la revendication 1, caractérisé en ce que les pistes de guidage (35,41) du chariot de banc (6) s'étendent des deux côtés des pistes de guidage (33,34,40) de la poupée (5).

3. Tour comprenant un banc machine selon la revendication 1, caractérisé en ce qu'une paire supplémentaire de pistes de guidage (34,43), qui s'étend parallèlement aux pistes de guidage (33,34,45) de la poupée (5), est disposée sur le banc machine (22,31).

4. Tour comprenant un banc machine selon la revendication 3, caractérisé en ce que la paire supplémentaire de pistes de guidage (34) s'étend en face supérieure du banc machine (31).

5. Tour comprenant un banc machine selon la revendication 3, caractérisé en ce que le couple supplémentaire de pistes de guidage (43) est disposé sur une autre paroi frontale du banc machine (22) et en ce que les pistes de guidage (43) sont situées dans un plan vertical.

6. Tour comprenant un banc machine selon la revendication 1, caractérisé en ce qu'est prévue en face supérieure du banc machine (1,31), dans l'angle formé par les pistes de guidage (2,12,33,34,35,42,44), une surface de serrage (21,36,37) plane pour des groupes supplémentaires.

Fig. 1

Fig. 2

Fig. 4

Fig. 3

Fig. 6

Fig. 5